(19) **Europäisches Patentamt / European Patent Office / Office européen des brevets**

(11) **EP 3 291 090 B1**

(12) **EUROPÄISCHE PATENTSCHRIFT**

(45) Veröffentlichungstag und Bekanntmachung des Hinweises auf die Patenterteilung:
**03.11.2021   Patentblatt 2021/44**

(51) Int Cl.:
**G06F 9/451** (2018.01)          **G06N 3/08** (2006.01)
**G06F 9/48** (2006.01)

(21) Anmeldenummer: **16187360.9**

(22) Anmeldetag: **06.09.2016**

(54) **VERFAHREN UND SYSTEM ZUM BILDEN EINER DIGITALEN SCHNITTSTELLE ZWISCHEN ENDGERÄT UND APPLIKATIONSLOGIK VIA DEEP LEARNING UND CLOUD**

METHOD AND SYSTEM FOR FORMING A DIGITAL INTERFACE BETWEEN TERMINAL AND APPLICATION LOGIC VIA DEEP LEARNING AND CLOUD

PROCÉDÉ ET SYSTÈME DE FORMATION D'UNE INTERFACE NUMÉRIQUE ENTRE APPAREIL TERMINAL ET LOGIQUE D'APPLICATION VIA APPRENTISSAGE PROFOND ET INFORMATIQUE EN NUAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**07.03.2018   Patentblatt 2018/10**

(73) Patentinhaber: **Deutsche Telekom AG
53113 Bonn (DE)**

(72) Erfinder: **Schütte, Mark Christoph
13357 Berlin (DE)**

(74) Vertreter: **Vossius & Partner
Patentanwälte Rechtsanwälte mbB
Siebertstrasse 3
81675 München (DE)**

(56) Entgegenhaltungen:
**EP-A1- 2 851 830          US-A1- 2012 295 708
US-A1- 2013 212 501          US-A1- 2014 122 996**

• **None**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren und System zur Datenverarbeitung, insbesondere ein Verfahren und System zum Bilden einer digitalen Schnittstelle zwischen mindestens einem Endgerät und einer Applikationslogik. Dabei werden Anfragen an die Schnittstelle einheitlich in Textform umgewandelt und unter Verwendung von unstrukturierten Daten und Deep Learning Algorithmen einer Applikationsfunktion bzw. einer Ausführung zugeordnet.

Ferner wird zur Informationsausgabe an Mensch oder Maschine unter Verwendung von unstrukturierten Echtzeitdaten, Nutzerpräferenzen und Informationsinhalt ein optimales Gerät und/oder eine optimale Darstellungsform gewählt wird, ohne diese vorher zu spezifizieren.

Gegenwärtig werden täglich eine Vielzahl an verschiedenen Geräten genutzt, um eine Vielzahl von digitalen Services abzurufen. Um ortsunabhängig und endgerätunabhängig, z.B. auf dem Tablet und/oder auf dem Desktop PC, Zugriff auf Applikationen zu haben, müssen die jeweiligen Applikationen auf die entsprechenden Hardware- und Softwaresysteme portiert werden. Weiterhin haben verschiedene Endgeräte unterschiedliche neue Funktionalitäten, wie z.B. Sprachsteuerung, augmented Reality (AR) oder Gestensteuerung, die nicht notwendigerweise verschiedene Applikationsfunktionalitäten ansprechen.

Neue Endgeräte oder Applikation erfordern ebenfalls in der Regel einen hohen Aufwand, denn hier muss die Technologie der neuen Endgeräte in die entsprechende Applikation portiert und integriert werden, um eine Verwendung zu ermöglichen. Oftmals sind dazu kostenintensive Schnittstellen oder Individuallösungen notwendig. Weiter sind die voranstehenden Prozesse sind sehr zeitaufwändig.

Selbst wenn Individuallösungen, wie eine Schnittstellenprogrammiersprache zwischen verschiedenen Enderäten bzw. Betriebssystemen wie z.B. Android und iPhone existieren, die z.B. die Sprachsteuerung an verschiedenen Endgeräte ermöglichen, so fehlt hier eine Gesamtlösung. Die Gesamtlösung ermöglicht es innovative Produkte kostengünstig ohne hohen Einzelaufwand Endnutzern zur Verfügung zu stellen.

US 2012/295708 A1 betrifft das Verbinden eines Benutzers mit einem Computerprogramm unter Verwendung von Blickerkennung und Spracherkennung.

Als aktueller Stand der Technik sind Entwicklungsumgebungen im Browser zu nennen, die sogenannten Backend-As-A-Service Angebote. Dabei wird ein Backend einer Applikation auf einem Server gehostet, somit müssen lediglich die Präsentationsebenen für die verschiedene Endgeräte entwickelt werden. Im Browser wird dabei lediglich eine graphische Oberfläche (GUI) als Schnittstelle genutzt. Weitere Schnittstellen, wie z.B. zur Spracherkennung und Sprachausgabe müssen jedoch individuell geschaffen werden.

Mit anderen Worten ist es das Ziel der Erfindung die Integration und Zurverfügungstellung von innovativen und komplexen Technologien technisch zu erleichtern und zu beschleunigen. Weiter ist es ein Ziel eine einheitliche Oberfläche zum Aufrufen von Funktionen über verschiedene Endgeräte hinweg zu schaffen. Auch die Geschwindigkeit und Simplizität in der Veränderung von Rechten, Nutzern, Zur Verbesserung der Integrationsfähigkeit soll das Hinzufügen von zusätzlicher Applikationslogik soll vereinfacht werden, d.h. der Aufwand soll verringert werden mit dem alte Applikationen in die Schnittstelle integriert werden können.

Die vorliegende Erfindung löst die oben genannten Probleme mit den Merkmalen der unabhängigen Patentansprüche. Die abhängigen Patentansprüche beziehen sich auf weitere Aspekte der Erfindung.

Die Erfindung betrifft ein Verfahren zum Bilden einer digitalen Schnittstelle zur Bearbeitung einer Anfrage zwischen mindestens einem Endgerät und mindestens einer Applikationslogik. Wobei das Verfahren einen Konvertierungsschritt aufweist, in dem eine Anfrage von einem Endgerät empfangen wird und in dem die Anfrage in einen anfragespezifischen Metatext konvertiert wird und der anfragespezifische Metatext zusammen mit weiteren Metadaten an eine Klassifikationseinheit gesendet wird. Das Verfahren weist weiter einen Klassifikationsschritt auf, durchgeführt in der Klassifikationseinheit, in dem der anfragespezifische Metatext und die weiteren Metadaten empfangen werden, und der anfragespezifische Metatext einer Applikationsfunktionalität zugeordnet wird und der anfragespezifische Metatext zusammen mit einer Klassifikationsinformation und den weiteren Metadaten an eine Ausführungseinheit gesendet wird. Das Verfahren weist weiter einen Ausführungsschritt auf, durchgeführt in einer Ausführungseinheit, in dem der anfragespezifische Metatext und die weiteren Metadaten empfangen werden, und, abhängig von der Klassifikationsinformation, eine Applikationsfunktionalität ausgeführt wird und eine bei der Ausführung der Applikationsfunktionalität erzeugte Information an eine

Ausgabeeinheit gesendet wird. Das Verfahren weist weiter einen Ausgabeschritt auf, durchgeführt in der Ausgabeeinheit, in dem die erzeugte Information empfangen wird, ein der Information entsprechendes Zielformat für die Ausgabe der erzeugten Information ermittelt wird und eine dem Zielformat entsprechende Ausgabe auf mindestens einem Endgerät bewirkt wird. In dem Verfahren wird der Klassifikationsschritt basierend auf einem Deep-Learning Prozess durchgeführt, bei dem der anfragespezifische Metatext und die weiteren Metadaten ausgewertet werden.

In einem weiteren Aspekt des erfindungsgemäßen Verfahrens wird in dem Klassifikationsschritt auf eine Applikationsdatenbank zugegriffen, in der mindestens eine Applikationsfunktionalität verwaltet wird, und wobei in der Applikationsdatenbank zu jeder Applikationsfunktionalität für die Ausführung der Applikationsfunktionalität benötigte Informationen gespeichert sind.

In einem weiteren Aspekt des erfindungsgemäßen Verfahrens wird in dem Ausführungsschritt auf eine Administrationsdatenbank zugegriffen, in der für mindestens einen Benutzer und/oder Endgerät Rechte zur Verwendung der Schnittstelle, der Applikationsfunktionalitäten und/oder der Endgeräte verwaltet werden.

In einem weiteren Aspekt des erfindungsgemäßen Verfahrens nutzt der Deep-Learning Prozess ein *short conversational retrieval based deep learning* Modell, bei dem ein erster bestimmter Prozentsatz einer Vielzahl von anonymisierten früheren Anfragen genutzt wird, um das Modell zu trainieren und ein zweiter bestimmter Prozentsatz der Vielzahl von anonymisierten früheren Anfragen genutzt wird, um das Training des Modells zu verifizieren.

In einem weiteren Aspekt des erfindungsgemäßen Verfahrens werden eine oder mehrere der folgenden Eingaben zur Unterstützung des Deep-Learning Prozess genutzt: eine positive oder negative Nutzereingabe, eine nicht erfolgreiche Ausführung der Applikationsfunktionalität, ein abgebrochene Ausführung oder Ausgabe.

In einem weiteren Aspekt des erfindungsgemäßen Verfahrens ist die erzeugte Information eine Anfrage und die Konvertierung, Klassifikation und Ausführung werden nacheinander wiederholt durchgeführt bis ein Ausgabeschritt möglich ist.

In einem weiteren Aspekt des erfindungsgemäßen Verfahrens wird in dem Konvertierungsschritt mindestens eine Vergleichstabelle genutzt, die bestimmte Konvertierungsregeln zur Übersetzung einer Anfrage in eine Metatextsprache enthält.

Die Erfindung betrifft weiter ein System zum Bilden einer digitalen Schnittstelle zur Bearbeitung einer Anfrage zwischen mindestens einem Endgerät und mindestens einer Applikationslogik. Das System weist weiter eine Konvertierungseinheit auf, die dazu konfiguriert ist den Konvertierungsschritt durchzuführen, weiter dazu konfiguriert ist, eine Anfrage von einem Endgerät zu empfangen, die Anfrage in einen anfragespezifischen Metatext zu konvertieren, den anfragespezifischen Metatext zusammen mit weiteren Metadaten an eine Klassifikationseinheit zu senden. Das System weist weiter eine Klassifikationseinheit auf, die dazu konfiguriert ist, den Klassifikationsschritt durchzuführen, weiter dazu konfiguriert ist, den anfragespezifischen Metatext und die weiteren Metadaten zu empfangen, und den anfragespezifischen Metatext einer Applikationsfunktionalität zuzuordnen und den anfragespezifischen Metatext zusammen mit einer Klassifikationsinformation und den weiteren Metadaten an eine Ausführungseinheit zu senden. Das System weist weiter eine Ausführungseinheit auf, die dazu konfiguriert ist, den Ausführungsschritt durchzuführen, weiter dazu konfiguriert ist, den anfragespezifischen Metatext und die weiteren Metadaten zu empfangen, und, abhängig von der Klassifikationsinformation, eine Applikationsfunktionalität auszuführen und eine bei der Ausführung der Applikationsfunktionalität erzeugte Information an eine Ausgabeeinheit zu senden.

Das System weist weiter eine Ausgabeeinheit auf, die dazu konfiguriert ist, den Ausgabeschritt durchzuführen, weiter dazu konfiguriert die erzeugte Information zu empfangen, ein der Information entsprechendes Zielformat für die Ausgabe der erzeugten Information zu ermitteln und eine dem Zielformat entsprechende Ausgabe auf mindestens einem Endgerät zu bewirken. Die Klassifikationseinheit ist dazu konfiguriert den Klassifikationsschritt basierend auf einem Deep-Learning Prozess durchzuführen, wobei in dem Deep-Learning Prozess der anfragespezifische Metatext und die weiteren Metadaten ausgewertet werden.

In einem weiteren Aspekt des erfindungsgemäßen Systems ist die Klassifikationseinheit dazu konfiguriert, auf eine Applikationsdatenbank zuzugreifen, in der mindestens eine Applikationsfunktionalität verwaltet wird, und wobei in der Applikationsdatenbank zu jeder Applikationsfunktionalität für die Ausführung der Applikationsfunktionalität benötigte Informationen gespeichert sind.

In einem weiteren Aspekt des erfindungsgemäßen Systems ist die Ausführungseinheit dazu konfiguriert auf eine Administrationsdatenbank zuzugreifen, in der für mindestens einen Benutzer und/oder Endgerät Rechte zur Verwendung der Schnittstelle, der Applikationsfunktionalitäten und/oder der Endgeräte verwaltet werden.

In einem weiteren Aspekt des erfindungsgemäßen Systems nutzt der Deep-Learning Prozess ein *short conversational retrieval based deep learning* Modell, bei dem ein erster bestimmter Prozentsatz einer Vielzahl von anonymisierten früheren Anfragen genutzt wird, um das Modell zu trainieren und ein zweiter bestimmter Prozentsatz der Vielzahl von anonymisierten früheren Anfragen genutzt wird, um das Training des Modells zu verifizieren.

In einem weiteren Aspekt des erfindungsgemäßen Systems wird eine oder mehrere der folgenden Eingaben zur Unterstützung des Deep-Learning Prozess genutzt: eine positive oder negative Nutzereingabe, eine nicht erfolgreiche Ausführung der Applikationsfunktionalität, ein abgebrochene Ausführung oder Anzeige.

In einem weiteren Aspekt des erfindungsgemäßen Systems ist die erzeugte Information eine Anfrage und die Schritte Konvertierung, Klassifikation und Ausführung werden nacheinander wiederholt durchgeführt bis ein Ausgabeschritt möglich ist.

In einem weiteren Aspekt des erfindungsgemäßen Systems ist die Konvertierungseinheit dazu konfiguriert in dem Konvertierungsschritt mindestens eine Vergleichstabelle zu nutzen, die bestimmte Konvertierungsregeln zur Übersetzung einer Anfrage in eine Metatextsprache enthält.

Die Erfindung betrifft ferner eine Verwendung eines Systems nach mindestens einem obenstehenden Aspekte zur Durchführung eines Verfahrens nach mindestens einem oben beschriebenen Aspekte, um eine digitale Schnittstelle zur Bearbeitung einer Anfrage zwischen mindestens einem Endgerät und mindestens einer Applikationslogik zu bilden.

Die Erfindung unterscheidet sich vom Stand der Technik darin, dass keine direkte Kommunikation zwischen Präsentationslogik und Applikationslogik hergestellt wird. Stattdessen werden alle Anforderungen in eine textbasierte Metasprache übersetzt und dann basierend auf Metadaten, zu einer der Applikationsfunktionen klassifiziert. Nach der Klassifikation erfolgt dann ein Aufruf der Applikationslogik in der Ausführungseinheit und mindestens eine Information wird erzeugt um die Anfrage zu beantworten.

Bei der anschließenden Ausgabe der Informationen werde diese ebenfalls nicht in die entsprechende Gerätesprache portiert, sondern es wird nach einem einheitlichen Identifikator gesucht, wie z.B. Liste, Graphisch, sprachlich, VR, AR, IoT, Aufruf oder den Wunsch des Anwenders, um ein passendes Format und Endgerät zur Wiedergabe zu bestimmen.

Eine Ausführungsform der Erfindung erlaubt ein geräte- und plattformübergreifendes "Einhängen" von Funktionen und Applikationen, denn die Klassifikationseinheit erlernt in dem Deep Learning Prozess innerhalb kurzer Zeit den Aufruf der Applikationen zur Bearbeitung passender Anfragen.

In einer Ausführungsform der Erfindung wird zum Verwalten der Applikationen bevorzugt eine dynamische Oberfläche genutzt, bevorzugt eine Web-Oberfläche, die sehr weit verbreitet angesprochen werden kann und sind daher optimal Voraussetzungen zur Umsetzung der Erfindung bietet. Die Applikationen müssen somit nicht für einzelne Endgeräte portiert werden, stattdessen genügt eine Registrierung in der Applikationsdatenbank.

Eine Ausführungsform der Erfindung erlaubt die einheitliche Verarbeitung von Informationen auch aus verschiedenen Quellen und in verschiedenen Eingabeformaten, z.B. Spracheingabe, Stifteingabe, oder Maschineneingabe, und sorgt somit für eine übersichtliche Anwendungslandschaft und vermeidet die Entwicklung von zusätzlichen Schnittstellen. Dabei wird ein Metatext unabhängig vom Eingabeformat der verschiedenen Inputs gebildet und damit die Eventverarbeitung standardisiert. Die Kombination von Events und Inputs ist dadurch sehr einfach durchführbar und spezielle Events für verschiedene Inputformate sind nicht notwendig, sondern können einheitlich verarbeitet werden.

Eine Ausführungsform der Erfindung hat eine einheitliche Oberfläche und Applikationszugriffe sind endgeräteübergreifend gleich, da die Applikationszugriffe mit dem gleichen Metatext erfolgen.

Eine Ausführungsform der Erfindung erlaubt die Verwaltung von Rechten, Nutzer, Endgeräten und Applikationen über eine einfache Oberfläche, bevorzugt eine Web-Oberfläche, und ist dadurch sehr schnell anpassbar. Aufgrund der geringen Anforderungen der Oberfläche, bevorzugt einer Web-Oberfläche, ist die Integration einfach und intuitiv. Die Informationen zur Verwaltung sind in der Administrationsdatenbank gespeichert.

Verbesserungen gegenüber dem Stand der Technik ergeben sich aus der Möglichkeit der Nutzung via Web-Oberfläche/Schnittstelle, aus der standardisierten und vereinfachten Verfügbarkeit von komplexen Technologien, wie der Sprach- und Gestensteuerung, dem Anschluss an die Cloud der Dinge, der GUI- und Graphengeneration, dem Internet of Things, M2M sowie Ausgabe von AR / VR Projektionen, unter Nutzung der jeweiligen technischen Kapazitäten der Endgeräte. Bevorzugte Endgeräte sind Wearables, Smart Devices, Tablets, und Telefone mit technischen Kapazitäten wie Bluetooth, GPS, WLAN, Touch- und/oder Bewegungssensoren.

**Kurze Beschreibung der Zeichnungen**

Fig. 1 zeigt eine Darstellung eines Überblick Blockdiagram einer erfindungsgemäßen Ausführungsform,

Fig. 2 zeigt eine detaillierte Darstellung einer Anfrage an einem Endgerät in einer erfindungsgemäßen Ausführungsform,

Fig. 3 zeigt eine detaillierte Darstellung einer Konvertierung in einer Konvertierungseinheit in einer erfindungsgemäßen Ausführungsform,

Fig. 4 zeigt eine detaillierte Darstellung einer Klassifikation und Ausführung in einer Klassifikationseinheit und einer Ausführungseinheit in einer erfindungsgemäßen Ausführungsform, und

Fig. 5 zeigt eine detaillierte Darstellung eines Ausgabeschritts in einer Ausgabeeinheit und einem Endgerät in einer erfindungsgemäßen Ausführungsform.

**Ausführliche Beschreibung der Erfindung**

In der folgenden Beschreibung schließen, sofern nicht anders gekennzeichnet, Begriffe die im Singular verwendet sind auch immer den Begriff im Plural mit ein, wenn dies dem Fachmann als übliche Praxis in der Datenverarbeitung und/oder zweckmäßig erscheint. Insbesondere trifft das auf die Begriffe Endgerät, Informationsanfrage, Anfrage, Metatext, Tabelle, Applikationslogik und Metadaten zu.

Die Begriffe "-einheit" beziehen sich auf eine funktionale Einheit. Verschiedene Einheiten können zusammen und/oder getrennt als Hard- oder Software ausgestaltet sein. Insbesondere können verschiedene Einheiten einzeln als Software ausgebildet sein und zusammen auf einer Hardware ausgeführt werden oder zusammen als Software ausgeführt sein. Weitere Ausführungsformen ergeben sich dem Fachmann aus den jeweiligen funktionalen Anforderungen an die Einheiten.

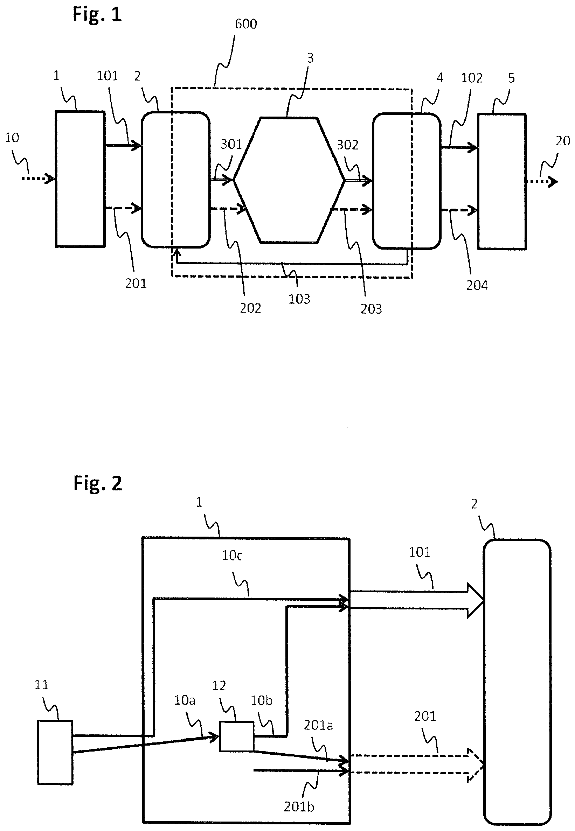

In Figur 1 ist eine Darstellung eines Überblick Blockdiagram einer erfindungsgemäßen Ausführungsform gezeigt. Aufgrund einer Informationsanfrage 10 eines Nutzers erzeugt ein erstes Endgerät 1 eine Anfrage 101, diese wird in einer Konvertierungseinheit 2 in einen Metatext 301 übersetzt, in einer Engine 3 wird Klassifizierungschritt und der Ausführungsschitt durchgeführt in dem der Metatext 301 klassifiziert und in einer Applikationslogik ausgeführt wird, um die Anfrage zu verarbeiten. Die erzeugte Information 302 wird an eine Ausgabeeinheit übergeben die eine geeignete Ausgabeform festlegt und eine Ausgabeinformation 102 an ein zweites Endgerät 5 zur Ausgabe übermittelt. Bei dem Verfahren werden parallel weitere Metadaten 201, 202, 203, 204 übertragen und/oder verarbeitet.

In einer Ausführungsform der Erfindung sind das erste Endgerät 1 und zweite Endgerät 5 identisch. In einer weiteren Ausführungsform der Erfindung sind das erste Endgerät 1 und zweite Endgeräte 5 nicht identisch. In einer weiteren Ausführungsform sind das erste Endgerät 1 und/oder das zweite Endgerät 5 eine Vielzahl von identischen oder unterschiedlichen Endgeräten.

In einer Ausführungsform der Erfindung wird ergänzend oder alternativ statt der Ausgabeinformation 102 eine erneute Anfrage 103 von der Ausgabeeinheit 4 an die Konvertierungseinheit übermittelt, der Konvertierungs-, Klassifizierungs-, Ausführungs- und Ausgabeschritt wird dann wiederholt, bis die Ausgabeeinheit eine Ausgabeinformation erzeugt und/oder das Verfahren abgebrochen wird.

In einer bevorzugten Ausführungsform erfolgt die Klassifikation des Metatextes 301, sowie von weiteren unstrukturierten Informationen 202 in dem Deep-Learning Prozess mit einem *short conversational retrieval based deep learning* Modell und die Festlegung der geeigneten Ausgabeform für die Ausgabe durch eine Auswertung von Daten 203, sowie Analyse der Ergebnisinformationen 302 und unter Einbeziehung ergänzender Voreinstellungen, z.B. von Nutzerpräferenzen und Unternehmensvorgaben.

In bevorzugten Ausführungsformen umfasst das Verfahren die Implementierung elektronischer Bedienungs- oder Kommunikationsgeräte und -methoden. Bevorzugt die Implementierung einer Sprach- und Gestensteuerung, eines Anschluss an die Cloud der Dinge, die Generation von GUI- und Graphendaten, eines Anschluss an das Internet of Things.

Figur 2 zeigt eine detaillierte Darstellung der Anfrage an einem Endgerät in einer erfindungsgemäßen Ausführungsform. Die Informationsanfrage 10 eines Nutzers 11 ist eine nicht maschinenverarbeitbare Informationsanfrage 10a, die im Endgerät 1 in einer Verarbeitungseinheit 12 in eine maschinenverarbeitbare Informationsanfrage 10b umgewandelt wird. In dem Endgerät werden auch weitere Metadaten 201 erzeugt. Alternativ oder ergänzend ist die Informationsanfrage 10 bereits eine maschinenverarbeitbare Informationsanfrage 10c die nicht gewandelt werden muss.

Ein menschlicher Nutzer 11 übermittelt seine Informationsanfrage 10a über verschiedene Kommunikationswege, bevorzugt Sprache, Chat, Gestik, Bewegung, Sensorik, Toucheingabe, Tastendruck und/oder eigens definierter Events, an sein Endgerät 1. Das Endgerät 1 ist bevorzugt ein Mobiltelefon, ein Smart Wearable, ein Smart Device, ein Tablet, ein PC, ein Sensor, ein IoT-Gerät, ein Smart Car und/oder ein Smarthome.

Ein maschineller Nutzer 11, bevorzugt ein Mobiltelefon, ein Smart Wearable, ein Smart Device, ein Tablet, ein PC, ein Sensor, ein IoT Gerät, ein Smart Car ein Smarthome und/oder eine künstliche Intelligenz übermittelt entweder eine maschinenverarbeitbare Informationsanfrage 10c oder eine nicht maschinenverarbeitbare Informationsanfrage 10a. Im letzteren Fall stehen im die oben genannten bevorzugten Kommunikationswege zur Verfügung.

In einer bevorzugten Ausführungsform der Erfindung ist sich als Endgerät 1 der Form der Anfrage bewusst entsprechend wird die Informationsanfrage 10a oder 10c entweder in ihrer ursprünglichen Form 10c oder in einer verarbeiteten Form 10b als Anfrage 101 an die Konvertierungseinheit 2 gesendet.

In einer Ausführungsform der Erfindung werden in dem Endgerät zu der Anfrage weitere Metadaten 201a, 201b erzeugt, bevorzugt sind diese weiteren Metadaten 201a, 201b der Anfrage 101 eindeutig zuordenbar. Die weiteren Metadaten 201a, 201b umfassen bevorzugt mindestens eine der folgenden Informationen: Anwenderinformationen, Sitzungsinformationen, Informationen zum Endgerät, Uhrzeit und/oder Datumsinformationen und eine Identifikationsnummer der Anfrage, zur eindeutigen Zuordnung der Informationen zu dieser.

In einer Ausführungsform der Erfindung werden die weiteren Metadaten 201a in der Verarbeitungseinheit 12 bei der Verarbeitung der Informationsanfrage 10a erzeugt.

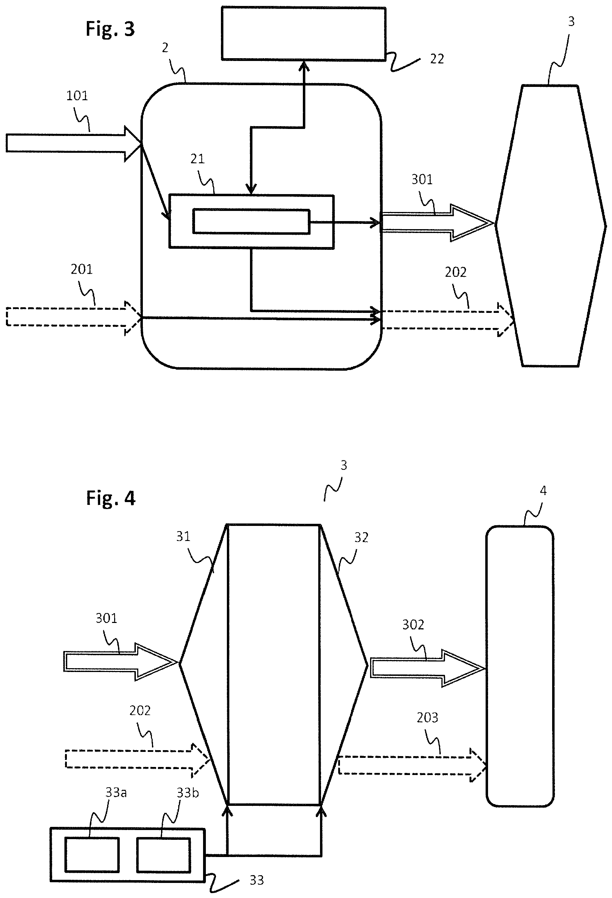

Figur 3 zeigt eine detaillierte Darstellung einer Konvertierung in einer Konvertierungseinheit in einer erfindungsgemäßen Ausführungsform. In einem Konvertierungsschritt, der in der Konvertierungseinheit 2 durchgeführt wird, wird die Anfrage 101 von einer Verarbeitungseinheit 21 in einen Metatext 301, in einer bevorzugten Ausführungsform in einen menschlichen Text, konvertiert. Der Metatext 301 ist in den Ausführungsformen so gewählt, dass er anschließend von der Engine 3 weiter verarbeitet werden kann. Nach der Konvertierung wird der Metatext an die Engine 3 übergeben. Ferner werden weitere Metadaten 202 an die Engine 3 übergeben.

In der Informationsanfrage sind verschiedene Kommunikationswege beschrieben. Für jeden Kommunikationsweg, erfolgt eine geeignete Konvertierung der entsprechenden Anfrage 101 in den Metatext 301. In einer Ausführungsform der Erfindung wird die Konvertierung mit standardisierten Konvertierungsvorgängen und/oder mithilfe einer Tabelle 22 durchgeführt. In der Tabelle 22 sind die nötigen Konvertierungsinformationen zu der Anfrage 101 gespeichert.

In einer Ausführungsform der Erfindung wird Sprachaudio mithilfe von komplexen Konvertierungsvorgängen in menschlichen Text, d.h. Metatext 301, übersetzt. In einer Ausführungsform der Erfindung werden GPS Informationen mithilfe der Landkarte einem Ort zugeordnet und dieser in Metatext 301 konvertiert. In einer Ausführungsform der Erfindung werden Gesten, Bewegungen des Endgeräts, Sensorinformationen, Toucheingaben und/oder eine Tastenbetätigung mithilfe von Vergleichstabellen in der Metatext 301 konvertiert.

In einer Ausführungsform der Erfindung werden weitere Metadaten 202 von der Konvertierungseinheit 2 an die Engine 3 übergeben. Die weiteren Metadaten 202 enthalten die teilweise oder vollständig die Metadaten 201 und/oder ergänzende Metadaten. Die ergänzenden Metadaten werden von der Konvertierungseinheit 2 erzeugt, bevorzugt bei der Konvertierung in der Verarbeitungseinheit 21.

In einer alternativen Ausführungsform ist die Tabelle 22 in der Konvertierungseinheit 2 ausgeführt.

Figur 4 zeigt eine detaillierte Darstellung der Klassifikation und Ausführung in einer Klassifikationseinheit 31 und einer Ausführungseinheit 32 in einer erfindungsgemäßen Ausführungsform. In der Engine 3 wird in einer Klassifikationseinheit 31 ein Klassifikationsschritt durchgeführt, in dem der Metatext 301 einer Applikationslogik in einer Ausführungseinheit 32 zugeordnet wird. Informationen über vorhandene Funktionen der Applikationlogik, bezieht die Klassifikationseinheit 31 aus einem unterliegenden System 33. Informationen über Rechte zur Verwendung der Schnittstelle, der Applikationsfunktionalitäten und/oder der Endgeräte bezieht die Ausführungseinheit von dem unterliegenden System 33.

Das unterliegende System enthält eine Applikationsdatenbank 33a und eine Administrationsdatenbank 33b. In dem unterliegenden System 33a müssen Applikationen ihre Eigenschaften sowie bevorzugt Informationen darüber welcher Metatext auf einen Aufruf hinweist einreichen.

In einer bevorzugten Ausführungsform der Erfindung erfolgt der Zugriff auf das unterliegende System 33 über eine einfach zu erreichende Schnittstelle, bevorzugt das Web.

Im Klassifikationsschritt erfolgt die Zuordnung einer Applikationsfunktionalität auf Basis des Metatextes 301. Da der Klassifikationsschritt sehr häufig durchgeführt wird, sollte die Klassifikationseinheit 2 bevorzugt dynamisch agieren. Der Klassifikationsschritt kann nicht von Hand getätigt werden und stellt ein komplexes Problem dar.

In einer bevorzugten Ausführungsform der Erfindung wird im Klassifikationsschritt auf Methoden der Künstlichen Intelligenz zurückgegriffen. Bevorzugt wird ein Deep-Learning Prozess verwendet. Besonders bevorzugt werden sogenannte *retrieval based* Modelle oder Methoden der Sprachübersetzung genutzt.

Der Deep-Learning Prozess ist so ausgeführt, dass das System selbständig die Klassifikation erlernt und verbessert. Der Deep-Learning Prozess greift dabei auf die im Unterliegenden System, bevorzugt in der Applikationsdatenbank 33a gespeicherten Informationen zurück.

Zum Training des Modells werden bevorzugt 80 Prozent der anonymisierten vergangenen Anfragen an das System genutzt, welche in dem unterliegenden System 33 gespeichert werden, bevorzugt in der Apppliktionsdatenbank 33a. Ebenfalls bevorzugt wird der Nutzer gebeten die letzte Anfrage als falsch oder richtig zu bewerten ergänzend oder alternativ wird die Anfrage wird als falsch bewertet, wenn das erfindungsgemäße Verfahren abgebrochen wird. Die Bewertung wird ebenfalls gespeichert und dient zum Training des Systems.

Auf Grundlage dieser Informationen wird ein funktionales Trainings Set erstellt, welches benötigt wird, um eine Klassifikationsintelligenz zu erzeugen. Um das Lernen des Algorithmus zu ermöglichen, wird ferner eine Kostenfunktion benötigt. Beim Training liegt das System entweder richtig oder falsch. Daher wird in diesem Fall eine Kostenfunktion von

$$L = -y * \ln(y') - (1 - y) * \ln(1-y)$$

bevorzugt. Zur Verifikation des Trainings werden bevorzugt die verbleibenden 20 Prozent der vergangenen Anfragen genutzt.

Das Ergebnis der Klassifikation in 31 ist ein Aufruf einer Applikationslogik in der Ausführungseinheit 32. Diese wird mit allen notwendigen Informationen, die in dem unterliegenden System 33a definiert sind aufgerufen. Daraufhin wird die entsprechende Applikationslogik in der Ausführungseinheit ausgeführt.

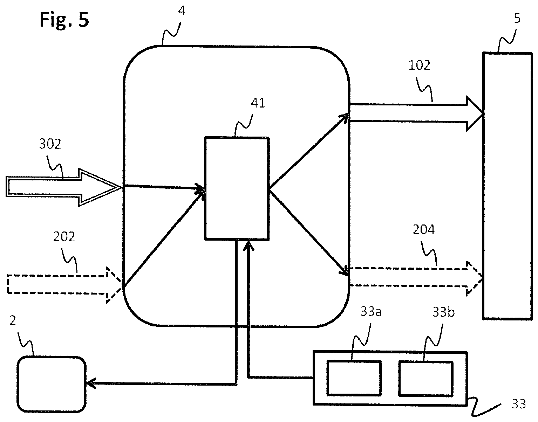

Figur 5 zeigt eine detaillierte Darstellung des Ausgabeschritts in einer Ausgabeeinheit und einem Endgerät in einer erfindungsgemäßen Ausführungsform.

Die Ausgabeeinheit 4 nimmt von der Ausführungseinheit 32 Aufrufe entgegen, mit dem Ziel eine Informationen 102 an einen Nutzer zu liefern. Dieser Aufruf kann eine Spezifikation des Endgerätes 5 beinhalten, aber muss aber mindesten die zu übergebenden Daten 301, 202 definieren und beinhalten. Anhand der übergebenden Daten 301, 202 bestimmt eine Verarbeitungseinheit 41 in der Ausgabeeinheit 4 ein entsprechendes Zielformat für die Ausgabe der Informationen 301, und bewirkt eine dem Zielformat entsprechende Ausgabe auf einem Endgerät 5.

In einer Ausführungsform der Erfindung beinhaltet das Bewirken einer Ausgabe das Bestimmen eines finalen Systems zur Verarbeitung der Daten in der Ausgabeeinheit 4. Das System zur Verarbeitung der Daten ist bevorzugt ein System zur dynamischen Erzeugung von Graphen- und GUI, ein System zur Verbindung zu einer Augmented- und Virtual Reality Plattform zum Streamen von Objekten beim Endnutzer, ein Übersetzer zum Abrufen einer M2M, Cloud der Dinge, Internet of Things oder Smart Device Funktionalität, eine Schnittstellen zur Auslösung einer Vibration, und Systeme zur Erzeugung anderer Bewegungen und Töne des Endgeräts. Besonders bevorzugt ist ein Speech Synthesizer zur Ausgabe eines Ergebnisses via menschlicher Sprache. Ebenfalls besonders bevorzugt ist eine Ausgabe via Text und/oder Liste. Ebenfalls besonders bevorzugt ist das Erzeugen einer erneuten Abfrage von weiteren Funktionalitäten und/oder Informationen von der Schnittstelle durch das Senden einer erneuten Anfrage an die Konvertierungseinheit 2.

In einer Ausführungsform der Erfindung greift die Ausgabeeinheit 4 auf das unterliegende System 33 zu, um Rechte zur Verwendung der Schnittstelle, der Applikationsfunktionalitäten und/oder der Endgeräte 1 und 5 abzufragen und/oder Informationen aus der Applikationsdatenbank 33a zu erhalten. Auf dem Endgerät 5 wird die erzeugte Information 302 entsprechend den Informationen aus dem unterliegenden System 33 angezeigt beziehungsweise ausgeführt.

In einer speziellen bevorzugten Ausführungsform der Erfindung wird in dem erfindungsgemäßen Verfahren im System eine Spracherkennung durchgeführt und eine Applikationslogik basierend auf dem Metatext der eingegangenen Sprache ausgeführt und die erzeugte Information als synthetische Sprache, GUI, Graph, Text, AR/VR Objekt/Simulation und/oder Liste ausgegeben.

Dementsprechend besteht das erfindungsgemäße System aus einem Endgerät 1 an dem die Spracheingabe erfolgt. In dem Endgerät 1 wird die Spracheingabe 10 maschinenverarbeitbar erfasst, bevorzugt als digitales Audiosignal. Das Endgerät gibt die Anfrage 101 an die Konvertierungseinheit 2 weiter. Die Konvertierungseinheit 2 ist auf einem Server als Software ausgebildet. Als Endgerät 1 werden ein Mobiltelefon, ein Smart Wearable, ein Smart Device, ein Tablet, ein PC, ein Sensor, ein IoT Gerät, ein Smart Car und/oder ein Smarthome bevorzugt.

In der Konvertierungseinheit 2 findet eine Vorverarbeitung statt, bei der eine Umwandlung der Audiodaten in Worte durchgeführt wird. Dabei werden Spracherkennungsalgorithmen benutzt. Nach Umwandlung werden die erkannten Worte und/oder Sätze in eine Metatextsprache konvertiert und als Metatext 301 an die Klassifizierungseinheit 31 weitergegeben. Die Klassifizierungseinheit 31 ist bevorzugt auf einem weiteren Server ausgebildet.

Die Weitergabe erfolgt zusammen mit einer ID. Sollten die Anfrage 101 zu mehreren Metatexten 301 führen, ist diesen eine einheitliche ID zugeordnet. In der Klassifikationseinheit erfolgen eine Bestimmung der zur Beantwortung/Bearbeitung der Anfrage benötigten Applikationslogik und der entsprechende Aufruf der Applikationslogik in der Ausführungseinheit 32.

Die Klassifikationseinheit 31 greift dabei auf eine Applikationsdatenbank 33a zu, in der die jeweiligen für den Aufruf der jeweiligen Applikationslogik benötigten Informationen gespeichert sind. Bevorzugt sind das unter Anderem API Eigenschaften, Formatierungsinformation, und Kontextinformationen die in der gespeichert Applikationsdatenbank 33a gespeichert sind.

Die Applikationslogik greift auf eine Administrationsdatenbank 33b zurück in der die jeweiligen Nutzer-, Endgeräte-, und Applikationsrechte verwaltet werden. Die verschiedenen Applikationslogiken können auf verschiedenen Servern ausgebildet sein. Im Anschluss liefert die jeweilige Applikationslogik die erzeugte Information an die Ausgabeeinheit 4.

In der Ausgabeinheit 4 werden alle Informationen die zur gleichen Anfrage 101 gehören zusammengestellt, bevorzugt wird dabei die ID verwendet. Nach dem Zusammenstellen werden die Informationen analysiert und ein geeignetes Zielformat festgelegt. Das Zielformat richtet sich sowohl nach den zur Ausgabe verfügbaren Endgeräten als auch nach den individuellen Rechten und weiteren Voreinstellungen die in dem unterliegenden System 33 hinterlegt sind. Die Ausgabe erfolgt dabei nicht notwendigerweise auf dem gleichen Endgerät 1 auf dem die Spracheingabe erfolgte sondern auf dem für die jeweilige Information am besten geeigneten Endgerät 5.

Die erzeugte Information kann unvollständig sein und/oder eine weitere Anfrage enthalten. In diesem Fall wird erneut eine Anfrage an das System übermittelt, solange bis die erzeugte Information vollständig ist und/oder keine weiteren Anfragen mehr nötig sind.

In dem Klassifikationsschritt wird das Deep-Learning genutzt um die Zuordnung der aufzurufenden Applikationslogik zu den Worten der Metasprache zu optimieren. Die Zuordnung kann nicht a priori erfolgen. Durch die dynamische intelligente Zuordnung der jeweiligen Applikationslogik ist es mit dem erfindungsgemäßen Verfahren und System möglich, neue Anwendungen einfach zu integrieren.

Neue Anwendungen müssen lediglich in der Applikationdatenbank 33a registriert werden und die administrativen Einträge in der Administrationsdatenbank 33b müssen aktualisiert werden. Aufgrund des Deep-Learnings ermöglicht das erfindungsgemäße System dann nach einer Trainingsphase den Zugriff auf die Neue Applikationslogik, ohne dass diese aufwendig integriert werden musste.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Es versteht sich, dass Fachleute Änderungen und Abwandlungen machen können, ohne den Umfang und der folgenden Ansprüche zu verlassen. Insbesondere umfasst die Erfindung ebenfalls Ausführungsformen mit jeglicher Kombination von Merkmalen, die vorstehend oder nachfolgend zu verschiedenen Ausführungsformen genannt oder gezeigt sind.

Die Erfindung umfasst ebenfalls einzelne Merkmale in den Figuren auch wenn sie dort im Zusammenhang mit anderen Merkmalen gezeigt sind und/oder vorstehend oder nachfolgend nicht genannt sind. Auch können die in den Figuren und der Beschreibung beschriebenen Alternativen von Ausführungsformen und einzelne Alternativen deren Merkmale vom Erfindungsgegenstand beziehungsweise von den offenbarten Gegenständen ausgeschlossen sein. Die Offenbarung umfasst Ausführungsformen, die ausschließlich die in den Ansprüchen beziehungsweise in den Ausführungsbeispielen beschriebenen Merkmale umfasst sowie auch solche, die zusätzliche andere Merkmale umfassen.

## Referenzen

"Improved Deep Learning Baselines for Ubuntu Corpus Dialogs, " Rudolf Kadlec, Martin Schmid, und Jan Kleindienst, unter arXiv:1510.03753

## Abkürzungen

     GUI - Graphical User Interface
     AR - Augmented Reality
     VR - Virtual Reality
     API - Application Programming Interface
     IoT- Internet of Things

## Patentansprüche

1.  Verfahren zum Bilden einer digitalen Schnittstelle zur Bearbeitung einer Anfrage zwischen mindestens einem Endgerät und mindestens einer Applikationslogik, wobei das Verfahren aufweist:

     a) einen Vorbereitungsschritt, in dem die Applikationslogik Informationen über in der Applikationslogik vorhandene Applikationsfunktionalitäten sowie Informationen darüber, welcher anfragespezifische Metatext (301) auf einen Aufruf hinweist, bei einer Applikationsdatenbank (33a) einreicht;
     b) einen Konvertierungsschritt, in dem eine Anfrage von einem ersten Endgerät (1) über einen Kommunikationsweg empfangen wird; in dem die Anfrage entsprechend dem Kommunikationsweg mittels standardisierter Konvertierungsvorgänge und/oder mittels einer Tabelle (22) in einen anfragespezifischen Metatext (301) konvertiert wird; und der anfragespezifische Metatext (301) zusammen mit weiteren Metadaten an eine Klassifikationseinheit (31) gesendet wird;
     c) einen Klassifikationsschritt, durchgeführt in der Klassifikationseinheit (31), in dem der anfragespezifische Metatext (301) und die weiteren Metadaten empfangen werden, und der anfragespezifische Metatext (301) einer Applikationsfunktionalität der Applikationslogik aus der Applikationsdatenbank (33a) auf Basis des anfragespezifischen Metatext (301) zugeordnet wird und der anfragespezifische Metatext (301) zusammen mit einer Klassifikationsinformation und den weiteren Metadaten an eine Ausführungseinheit (32) gesendet wird;
d) einen Ausführungsschritt, durchgeführt in der Ausführungseinheit (32), in dem der anfragespezifische Metatext (301) und die weiteren Metadaten empfangen werden, und eine den Klassifikationsinformationen entsprechende Applikationsfunktionalität der Applikationslogik ausgeführt wird und eine bei der Ausführung der Applikationsfunktionalität in der Applikationslogik erzeugte Information (102) an eine Ausgabeeinheit (4) gesendet wird;
e) einen Ausgabeschritt, durchgeführt in der Ausgabeeinheit (4), in dem die erzeugte Information (102) empfangen, in einer Verarbeitungseinheit (41) ein finales System zur Verarbeitung der Information (102) bestimmt, und eine Ausgabeinformation an ein zweites Endgerät (5) zur Ausgabe übermittelt wird; und

wobei beim Klassifikationsschritt auf eine Künstliche Intelligenz zurückgegriffen wird, die einen Deep-Learning Prozess verwendet, der auf in der Applikationsdatenbank (33a) gespeicherte Informationen zurückgreift.

2.  Verfahren nach Anspruch 1, wobei der Deep-Learning Prozess ein short conversational retrieval based deep learning Modell nutzt, bei dem ein erster bestimmter Prozentsatz einer Vielzahl von anonymisierten früheren Anfragen genutzt wird, um das Modell zu trainieren und ein zweiter bestimmter Prozentsatz der Vielzahl von anonymisierten früheren Anfragen genutzt wird, um das Training des Modells zu verifizieren.

3.  Verfahren nach Anspruch 2, wobei eine oder mehrere der folgenden Eingaben zur Unterstützung des Deep-Learning Prozesses genutzt wird:

     i) eine positive oder negative Nutzereingabe;
     ii) eine nicht erfolgreiche Ausführung der Applikationsfunktionalität;
     iii) eine abgebrochene Ausführung der Schritte d) und e).

4.  Verfahren nach einem der Ansprüche 1 bis 3, wobei die erzeugte Information (102) eine erneute Anfrage (103) von weiteren Funktionalitäten und/oder Informationen ist und die Schritte b) bis d) nacheinander wiederholt durchgeführt werden, bis die Ausgabeeinheit eine Ausgabeinformation erzeugt und/oder das Verfahren abgebrochen wird.

5.  System zum Bilden einer digitalen Schnittstelle zur Bearbeitung einer Anfrage zwischen mindestens einem ersten Endgerät (1) und mindestens einer Applikationslogik, wobei das System eine Applikationsdatenbank (33a), eine Konvertierungseinheit, eine Klassifikationseinheit (31), eine Ausführungseinheit (32), und eine Ausgabeeinheit (4) aufweist; wobei das System konfiguriert ist, das Verfahren nach einem der Ansprüche 1 bis 4 auszuführen.

6. Verwendung eines Systems nach Anspruch 5 zur Durchführung eines Verfahrens nach mindestens einem der Anspruche 1 bis 4, um eine digitale Schnittstelle zur Bearbeitung einer Anfrage zwischen mindestens einem ersten Endgerät (1) und mindestens einer Applikationslogik zu bilden.

## Claims

1. A method of forming a digital interface for processing a request between one or more clients and one or more application logics, the method comprising:

   a) a preparation step, wherein the application logic enters information on application functionalities within the application logics as well as information on the request-specific metatext (301) pointing at a request into an application database (33a);

   b) a conversion step, wherein a request is received by a first client (1) via a communication path; wherein the request is converted into a request-specific metatext (301) in accordance with the communication path using standardized conversion processes and/or a table (22); and the request-specific metatext (301) is transmitted to a classification unit (31) together with additional meta data;

   c) a classification step implemented in the classification unit (31), wherein the request-specific metatext (301) and the additional meta data are received, and the request-specific metatext (301) is assigned to an application functionality of the application logic from the application database (33a) based on the request-specific metatext (301) and the request-specific metatext (301) is transmitted to an implementing unit (32) together with classification information and the additional meta data;

   d) an implementation step implemented in the implementing unit (32), wherein the request-specific metatext (301) and the additional meta data are received and an application functionality of the application logic corresponding to the classification information is implemented and information (102) generated during implementation of the application functionality in the application logic is transmitted to an output unit (4);

   e) an output step implemented in the output unit (4), wherein the generated information (102) is received, a final system for processing the information (102) is determined in a processing unit (41) and output information is transmitted to a second client (5) for being output; and

   wherein an artificial intelligence is used during the classification step, which AI applies a deep learning process drawing upon the information stored in the application database (33a).

2. The method of claim 1, wherein the deep learning process uses a short conversational retrieval based deep learning model using a first specific percentage of a plurality of anonymized earlier requests to train the model and a second specific percentage of the plurality of anonymized earlier requests is used to verify the training of the model.

3. The method of claim 2, wherein one or more of the following entries is/are used to assist the deep learning process:

   i) a positive or negative user entry;
   ii) an unsuccessful implementation of the application functionality;
   iii) an interrupted implementation of steps d) and e).

4. The method of any of claims 1-3, wherein the generated information (102) is a new request (102) for additional functionalities and/or information and steps b) to d) are repeated until the output unit generates output information and/or the process is interrupted.

5. A system for forming a digital interface for processing a request between one or more first clients (1) and one or more application logics, the system comprising an application database (33a), a converting unit, a classifying unit (31), an implementing unit (32) and an output unit (4), wherein the system is configured to implement the method of any of claims 1-4.

6. Use of a system according to claim 5 for implementing a method of at least one of claims 1-4 for forming a digital interface for processing a request between one or more first clients (1) and one or more application logics.

## Revendications

1. Procédé de formation d'une interface numérique pour le traitement d'une requête entre au moins un terminal et au moins une logique d'application, ledit procédé comprenant :

a) une étape préparatoire, où la logique d'application fournit à une base de données d'application (33a) des informations sur les fonctionnalités d'application présentées dans la logique d'application ainsi que des informations sur le métatexte (301) avertissant d'un appel, spécifique à la requête ;

b) une étape de conversion, où une requête est reçue d'un premier terminal (1) via un trajet de communication ; où la requête est convertie en fonction du trajet de communication en un métatexte (301) spécifique à la requête, au moyen de processus de conversion normalisés et/ou au moyen d'un tableau (22) ; et le métatexte (301) spécifique à la requête est transmis avec d'autres métadonnées à une unité de classification (31) ;

c) une étape de classification, exécutée dans l'unité de classification (31), où le métatexte (301) spécifique à la requête et les autres métadonnées sont reçus, et le métatexte (301) spécifique à la requête est affecté à une fonctionnalité d'application de la logique d'application de la base de données d'application (33a) sur la base du métatexte (301) spécifique à la requête, et le métatexte (301) spécifique à la requête est transmis à une unité d'exécution (32) avec une information de classification et les autres métadonnées ;

d) une étape d'exécution, exécutée dans l'unité d'exécution (32), où le métatexte (301) spécifique à la requête et les autres métadonnées sont reçus, et une fonctionnalité d'application de la logique d'application correspondant aux informations de classification est exécutée et une information (102) générée dans la logique d'application lors de l'exécution de la fonctionnalité d'application est transmise à une unité de sortie (4) ;

e) une étape de sortie, exécutée dans l'unité de sortie (4), où l'information (102) générée est reçue, un système final pour le traitement de l'information (102) est déterminé dans une unité de traitement (41), et une information de sortie est transmise à un deuxième terminal (5) pour sortie ; et

où il est recouru à une intelligence artificielle lors de l'étape de classification, laquelle met en œuvre un processus d'apprentissage profond exploitant des informations enregistrées dans la base de données d'application (33a).

2. Procédé selon la revendication 1, où le processus d'apprentissage profond recourt à un modèle d'apprentissage basé sur une extraction conversationnelle courte, où est utilisé un premier pourcentage défini d'une pluralité de requêtes précédentes anonymisées pour entraîner le modèle, et où est utilisé un deuxième pourcentage défini de la pluralité de requêtes précédentes anonymisées pour vérifier l'entraînement du modèle.

3. Procédé selon la revendication 2, où une ou plusieurs des entrées suivantes sont utilisées pour assister le processus d'apprentissage profond :

i) une entrée d'utilisateur positive ou négative ;
ii) une exécution infructueuse de la fonctionnalité d'application ;
iii) une exécution interrompue des étapes d) et e).

4. Procédé selon l'une des revendications 1 à 3, où l'information (102) générée est une requête (103) renouvelée d'autres fonctionnalités et/ou informations, et les étapes b) à d) sont répétées successivement jusqu'à ce que l'unité de sortie génère une information de sortie et/ou que le procédé soit interrompu.

5. Système pour la formation d'une interface numérique pour le traitement d'une requête entre au moins un premier terminal (1) et au moins une logique d'application, où ledit système comprend une base de données d'application (33a), une unité de conversion, une unité de classification (31), une unité d'exécution (32), et une unité de sortie (4) ; ledit système étant configuré pour exécuter le procédé selon l'une des revendications 1 à 4.

6. Utilisation d'un système selon la revendication 5 pour l'exécution d'un procédé selon au moins une des revendications 1 à 4, pour former une interface numérique pour le traitement d'une requête entre au moins un premier terminal (1) et au moins une logique d'application.

10

**Fig. 1**

**Fig. 2**

**Fig. 3**

**Fig. 4**

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2012295708 A1

**In der Beschreibung aufgeführte Nicht-Patentliteratur**

- **RUDOLF KADLEC ; MARTIN SCHMID ; JAN KLEINDIENST.** *Improved Deep Learning Baselines for Ubuntu Corpus Dialogs*